# EUROPÄISCHE PATENTSCHRIFT

(11) **EP 2 716 528 B1**
(45) Veröffentlichungstag und Bekanntmachung des Hinweises auf die Patenterteilung: **28.11.2018**
(21) Anmeldenummer: 13187088.3
(22) Anmeldetag: 02.10.2013
(51) Int. Cl.: B62D 33/04, B62D 35/00, B62D 63/06, B60P 3/04

(54) **Fahrzeuganhänger**
Vehicle trailer
Remorque de véhicule

(30) Priorität: 04.10.2012 DE 202012103810 U; 09.07.2013 DE 202013103029 U
(43) Veröffentlichungstag der Anmeldung: 09.04.2014
(73) Patentinhaber: Humbaur, Ulrich, 86368 Gersthofen (DE)
(72) Erfinder: Humbaur, Ulrich, 86368 Gersthofen (DE)
(74) Vertreter: Ernicke, Klaus Stefan

(56) Entgegenhaltungen:
- WO-A1-93/25406
- DE-A1-102006 027 455
- GB-A- 688 171
- GB-A- 2 457 896
- US-B1- 8 113 570

## Beschreibung

Die Erfindung betrifft einen Fahrzeuganhänger, insbesondere Pferdeanhänger, mit den Merkmalen im Oberbegriff des Hauptanspruchs.

Ein Pferdeanhänger mit ebener Frontwandung des Aufbaus ist aus der gattungsgemäßen GB 688,171 A bekannt. Die US 8,113,570 B1 zeigt eine Anhänger mit einem Kastenaufbau, an dessen Vorderwand eine vorgebaute aerodynamische Frontkappe angeordnet ist, die seitlich eine konische und ggf. frontseitig abgerundete Form hat. Die GB 2 457 896 befasst sich mit einem Pferdeanhänger, der eine Aufbauwandung mit einem aufgesetzten flachen Dach aufweist. Die seitliche Aufbauwandung weist übereinander angeordnete Wandpaneele und ein dazwischen angeordnetes horizontales Rahmenteil auf.
Aus der FR 2 932 433 und der GB 2 457 896 A sind Pferdeanhänger bekannt, die ein Fahrgestell mit einem festen Aufbau aufweisen, welcher einen Innenraum umgibt.
Der Aufbau besitzt einen Boden, eine seitliche Aufbauwandung und ein flaches Dach, die zur Fahrzeugfront hin seitlich verjüngt sind. Die Aufbauwandung weist eine gebogene Frontwand auf. Das Dach hat frontseitig einen entsprechend gebogenen Dachrand.
Die DE 81 06 717 U1 offenbart einen ähnlichen Pferdeanhänger, bei dem die seitliche Aufbauwandung und das hier höhere Dach gewölbte Frontwände aufweisen.

Die DE 20 2005 002 422 U1 zeigt einen anderen Pferdeanhänger. Dessen Dach und seitliche Aufbauwandung besitzen im Frontbereich eine nach vorn ausbauchende gerundete Form.

Es ist Aufgabe der vorliegenden Erfindung, einen verbesserten Fahrzeuganhänger, insbesondere Pferdeanhänger, aufzuzeigen.

Die Erfindung löst diese Aufgabe mit den Merkmalen im Hauptanspruch.

Der beanspruchte Fahrzeuganhänger, insbesondere Pferdeanhänger, hat den Vorteil einer besseren und kostengünstigeren Herstellbarkeit. Ferner ist ein Baukastensystem möglich. Unterschiedlichste Anhängervarianten können mit einer großen Zahl von Gleichteilen aufgebaut werden. Trotz großer Variationsmöglichkeiten wird die Wirtschaftlichkeit gewahrt.

Der Fahrzeuganhänger kann mit oder ohne eine frontseitige und vorzugsweise lösbar befestigte Bugschale gebaut werden. Durch die gewölbte Bugschale kann zusätzlich Stauraum im Frontbereich des Fahrzeuganhängers geschaffen werden. Außerdem hat die Bugschale Vorteile hinsichtlich einer strömungsgünstigen und optisch ansprechenden Gestaltung.
Die ebenen und miteinander fluchtenden aufrechten Frontwände am Dach und an der Aufbauwandung bieten technisch und optisch günstige Anbaumöglichkeiten für die Bugschale. Deren Schalenwölbung kann in einem fließenden Übergang an die benachbarten Wandflächen von Dach und Aufbauwandung anschließen. Hierfür ist es günstig, dass die besagten Frontwände und der umlaufende Schalenrand in parallelen Ebenen liegen. An den Übergangsstellen kann dadurch leichter und besser eine Abdichtung erzielt werden. Alternativ kann auch eine Distanzfuge vorhanden sein.

Der Fahrzeuganhänger hat einen frontseitigen zusätzlichen Aufnahme- oder Stauraum, der sich über die besagten Frontwände nach vorn erstreckt und der den Innenraum, insbesondere eine ggf. im vorderen Fahrzeugbereich angeordnete Sattelkammer, vergrößert. Der zusätzliche Stauraum erleichtert auch die Handhabung und Unterbringung von Sätteln und anderen sperrigen Gegenständen im Bereich der Sattelkammer. Der Aufnahme- oder Stauraum kann in unterschiedlicher Weise ausgebildet sein, wobei die Verwendung eines wannenförmigen Einsatzes besondere Vorteile hat. Dieser Einsatz lässt sich einerseits ohne Bugschale benutzen. Anderseits kann bei einer gemeinsamen Anordnung von Bugschale und Einsatz die Dichtigkeit verbessert werden.

Der Aufbau kann bevorzugt am Heck eine große Zugangsöffnung aufweisen, die gegebenenfalls mit einer schwenkbaren und als Rampe benutzbaren Heckklappe zumindest teilweise verschlossen werden kann. Ferner können an der seitlichen Aufbauwandung ein oder mehrere Seitentüren angeordnet sein. Eine solche Seitentüre kann z.B. den Zugang zu einer vorderen Sattelkammer und auch zu dem vorgenannten Aufnahme- oder Stauraum eröffnen. Die Seitentüre kann in konventioneller Weise oder bevorzugt mit einem gebogenen Türrahmen ausgebildet sein. Ein solcher mehrfach gebogener Türrahmen hat Vorteile hinsichtlich der Qualität und des Aufwands bei der Fertigung und auch hinsichtlich der Stabilität. Er kann insbesondere stabilisierend für das umgebende Paneel der Aufbauwandung wirken. Besondere Vorteile ergeben sich, wenn die seitliche Aufbauwandung aus einem Kunststoffmaterial besteht.

Das Dach kann im Frontbereich an einer Seitenwand ein Fenster mit einer nach vorn verjüngten Form aufweisen. Dies hat den Vorteil einer strömungsgünstigen Gestaltung sowie einer verbesserten Nutzbarkeit. Die Fenster- oder Lüftungsfläche kann vergrößert und strömungsgünstig sowie herstellungsgünstig ausgebildet sein. Außerdem kann durch die verjüngte und gerundete Form die ebenfalls gerundete Dachform in optisch ansprechender Weise aufgenommen und der verfügbare Platz optimal ausgenutzt werden.

Ein solches oder anderes Fenster im vorderen Dachbereich kann mehrteilig ausgebildet sein und einen vorderen, vorzugsweise festen Fensterteil und einen hinteren ausstellbaren Fensterteil aufweisen. Der vordere Fensterteil kann dreieckförmig und der hintere Fensterteil rechteck- oder trapezförmig ausgebildet sein. Dies hat Vorteile für die Lagerung des beweglichen Fensterteils und für den Belüftungs- und Beleuchtungseffekt für den Fahrzeuginnenraum.

Das Dach ist bevorzugt als einteilige Haube oder Schale aus Kunststoff ausgebildet. Dies hat Vorteile für die vereinfachte und kostengünstige Fertigungstechnik und die Montage.

Zwischen dem Dach und der seitlichen Aufbauwandung kann ein Ringanker mit einem seitlich und vorn umlaufenden Aufnahmeprofil und abwärts gerichteten Stützen vorhanden sein. Der Ringanker verbessert wesentlich die Fahrzeugstabilität und hat außerdem Vorteile für das Baukastensystem und die große Variabilität in der Aufbaugestaltung. Die Stützen können an unterschiedliche Wandpaneele in ihrer Ausgestaltung und Anordnung am Ringanker angepasst sein. Ferner ergeben sich besonders günstige Anbau- und Befestigungsmöglichkeiten für die ebene Frontwand der Aufbauwandung und eine eventuelle Bugschale. Für die Bugschale ist dabei eine verdeckte Befestigung günstig und bringt Vorteile hinsichtlich Montage, Befestigungssicherheit, Verschmutzung, entfallender Störkonturen sowie Abdichtung und Optik mit sich.

Für die Dichtigkeit des Aufbaus ist eine Dichtungsanordnung von Vorteil, die in die Aufnahmenut eines Aufnahmeprofils des Ringankers und/oder einer Stütze bzw. eines Stützprofils und/oder einer bodenseitigen Aufnahme sowie eines Heckrahmens integriert sein kann und für eine sichere Abdichtung eines eingesteckten Wandungsteils, insbesondere eines Paneels sorgt.

In mindestens einer der Seitenwände des Profils ist eine rinnenartige Ausnehmung ausgebildet, in der ein Dicht- oder Klebemittel aufgenommen werden kann. Wenn ein Wandungsteil in eine Aufnahmeöffnung des Steckprofils eingeführt wird, wird durch die rinnenartige Ausnehmung gewährleistet, dass das dort aufgetragene Dicht- oder Klebemittel sowohl eine Frontfläche, als auch eine Seitenfläche des Paneels bedeckt. Hierdurch wird eine besonders einfach herstellbare und gleichzeitig qualitativ hochwertige Klebe- oder Dichtverbindung geschaffen.

Durch die Anbringung des Dicht- oder Klebemittels in der rinnenartigen Ausnehmung wird insbesondere verhindert, dass ein Klebewulst beim Einschieben des Paneels vollständig in Richtung des Aufnahmegrundes weggeschoben wird. Die erzeugte Dicht- oder Klebestelle weist eine hohe Belastbarkeit auf. Das Eindringen von Wasser oder Fremdstoffen durch die Dicht- oder Klebestelle zu der in das Profil eingeschobenen Stirnseite des Paneels kann über die gesamte Breite der Dicht- oder Klebestelle vermieden werden. Damit eignet sich die Dichtungsanordnung besonders für Paneele aus quellfähigen Materialien, wie beispielsweise aus beschichteten Holzplatten.

Vorteilhafterweise bestehen die Paneele der Aufbauwandung aus Leichtmetall oder aus einem Holzwerkstoff oder aus einem zumindest bereichsweise aus Kunststoff bestehenden Plattenwerkstoff. Vorzugsweise haben die verschiedenen Paneelarten gleiche Dicken. Dies hat den Vorteil, dass die verschiedenen Paneelarten bedarfsweise eingesetzt und ggf. getauscht werden können. Die Fertigungstechnik und das Baukastensystem lassen sich dadurch optimieren.

In einer vorteilhaften Ausführung weist der Aufbau im Bereich der frontseitigen Verjüngung ebene Seitenwände an der Aufbauwandung und am Dach auf. Dies ist für die Fertigung und die Wirtschaftlichkeit sowie für die Raumausnutzung und für Einbauten, z.B. eine Seitentüre, günstig.

Der Aufbau hat im Weiteren Vorteile hinsichtlich bedarfsweiser Einbauten und deren Betriebsmittelversorgung. Hierfür sind ein Kabelkanal am Aufnahmeprofil des Ringankers und/oder eine Leitungsführung, insbesondere ein Leerrohr, im vorderen Dachbereich von Vorteil. Am Dach können ferner mittels geeigneter Adapter Anbaumöglichkeiten für eine Innenraumbeleuchtung, eine elektrische Verteilerdose, eine Belüftungseinrichtung im Dachbereich, Befestigungsbeschläge für Futternetze oder dgl. geschaffen werden.

Das Dach kann im vorderen Bereich und an der Oberseite eine Mulde für Dacheinbauten aufweisen. Dies erleichtert den bedarfsweisen Einbau einer Dachbelüftung, die sich dank der Muldenform strömungstechnisch und optisch besser in die Dachkontur einpassen lässt. Im Muldenbereich kann außerdem eine Innenraumbeleuchtung und eine Verteilerdose angeordnet sein.

Der Aufbau weist bevorzugt im vorderen Bereich des Innenraums eine quer oder schräg zur Fahrtrichtung ausgerichtete Trennwand auf. Dies hat verschiedene Vorteile. Der Innenraum des Fahrzeugs kann durch die Trennwand in einen hinteren Standbereich für Pferde oder Güter und einen vorderen Staubereich, insbesondere eine Sattelkammer, unterteilt werden.

Die Trennwand kann am oberen Trennwandbereich eine zur Fahrzeugfront zurückspringenden Stufe mit einer Befestigung für einen Futterbehälter aufweisen. Dies bietet eine platzsparende und verbesserte Unterbringungsmöglichkeit für Futterbehälter.

Die quer oder schräg zur Fahrtrichtung ausgerichtete Trennwand kann ferner einen unteren Wandsockel aufweisen, der in einem ausgesparten Bereich eines Bodenbelags angeordnet ist, wobei ein stumpfer Stoss mit einer versenkbaren Dichtung gebildet wird. Die Länge des Standbereichs kann dadurch optimal ausgenutzt werden. Ein unterer seitlich abstehender Wandsockel der Trennwand hat Vorteile für einen besseren Anschluss mit verbesserter Abdichtung an den Bodenbelag.

Über den Unteransprüchen sind weitere vorteilhafte Ausgestaltungen der Erfindung angeben.

Die Erfindung ist in den Zeichnungen beispielhaft und schematisch dargestellt. Im einzelnen zeigen:
- Figur 1:: einen Fahrzeuganhänger mit einer Bugschale und einer Seitentüre in perspektivischer Ansicht,
- Figur 2:: eine Variante des Fahrzeuganhängers von Figur 1 ohne Bugschale,
- Figur 3:: eine weitere Variante eines Fahrzeuganhängers von Figur 1 mit einer anderen Seitentüre und einer anderen Aufbauwandung,
- Figur 4:: eine Seitenansicht des Fahrzeuganhängers von Figur 1 mit teilweisem Einblick in den Innenraum,
- Figur 5:: eine teilweise aufgebrochene Seitenansicht des Fahrzeuganhängers von Figur 3,
- Figur 6:: einen Längsschnitt durch den Fahrzeuganhänger von Figur 3 mit Blickrichtung von der anderen Seite,
- Figur 7:: eine perspektivische Ansicht eines Fahrzeuganhängers gemäß Figur 2 mit einem Einsatz zur Bildung eines Aufnahme- oder Stauraums und einer Seitentüre,
- Figur 8:: eine perspektivische Innenansicht eines Pferdeanhängers mit einer vorderen Trennwand und weggelassenem Dach,
- Figur 9:: eine Heckansicht in den Innenraum eines Pferdeanhängers,
- Figur 10:: eine Draufsicht auf den Umriss und den Innenraum eines Fahrzeuganhängers,
- Figur 11:: eine perspektivische heckseitige Innenansicht eines Fahrzeuganhängers mit einer Bugschale und einem Aufnahme- und Stauraum,
- Figur 12 u. 13:: verschiedene Varianten eines Ringankers,
- Figur 14:: eine abgebrochene perspektivische Ansicht eines Aufnahmeprofils eines Ringankers,
- Figur 15 bis 17:: perspektivische abgebrochene Ansichten von verschiedenen Stützen und dort aufgenommenen Paneelen der Aufbauwandung,
- Figur 18:: eine perspektivische Ansicht eines Fensters am Dach in Öffnungs- und Schließstellung,
- Figur 19 u. 20:: verschiedene geschnitte Draufsichten auf eine Bugschale mit und ohne einen Einsatz an der Frontwand,
- Figur 21:: eine perspektivische abgebrochene Ansicht einer Befestigung für eine Bugschale,
- Figur 22:: eine perspektivische Unteransicht eines Dachs,
- Figur 23:: eine abgebrochene perspektivische Ansicht eines oberen Teils einer Trennwand mit einem Futtermittelbehälter,
- Figur 24:: eine abgebrochene Ansicht eines unteren Wandsockels einer Trennwand mit angrenzendem Bodenbelag,

- Figur 25:: eine perspektivische Ansicht eines Pferdeanhängers mit einer herausgezogenen Unterteilung des Innenraums nebst Bruststangen und
- Figur 26 bis 29:: eine Dichtungsanordnung für Profile und Wandungsteile in verschiedenen Darstellungen.

Die Erfindung betrifft einen Fahrzeuganhänger (1). Dieser ist in den gezeigten Ausführungsbeispielen als Pferdeanhänger ausgebildet. Er kann mit entsprechender Anpassung auch für andere Zwecke eingesetzt werden, z.B. als Viehtransporter, Kastentransporter für Güter oder dgl..

Der Fahrzeuganhänger (1) ist in den Zeichnungen in verschiedenen Ausführungsvarianten dargestellt. In allen Ausführungsformen weist er ein Fahrgestell (2) und einen festen Aufbau (6) auf, der einen Innenraum (10) umgibt. Der Aufbau (6) ist kastenförmig ausgebildet und hat an geeigneter Stelle, z.B. am Heck, eine Zugangsöffnung mit einem Heckrahmen und einer beweglichen Heckwand (11), die z.B. als abschwenkbare Heckklappe zur Bildung einer schrägen Zugangsrampe ausgebildet ist. Der Aufbau (6) weist einen auf dem Fahrgestell (2) angeordneten und befestigten Boden (8), eine seitliche Aufbauwandung (9) und ein hierauf aufgesetztes Dach (7) auf. Zwischen der Aufbauwandung (9) und dem Dach (7) kann ein nachfolgend näher erläuterter Ringanker (27) angeordnet sein.

Das Fahrgestell (2) weist eine starre, z.B. V-förmige Deichsel (3) mit einer Anhängevorrichtung (4) und zwei oder mehr Fahrzeugrädern (5) auf, die in den Zeichnungen nur teilweise dargestellt sind. Ferner kann eine Bremseinrichtung, insbesondere eine Auflaufbremse und eine Handbremse, vorhanden sein. Im Deichselbereich kann auch ein Stützrad angeordnet sein. Das Fahrgestell (2) kann einen tragenden und mit der Deichsel (3) verbundenen oder diese bildenden Rahmen mit Längsträgern (teilweise dargestellt) und gegebenenfalls Querträgern aufweisen. Das Fahrgestell (2) weist eine oder mehrere Achsen, z.B. die in den Zeichnungen dargestellten Tandemachsen, auf. In Abwandlung der gezeigten Ausführungsformen kann das Fahrgestell (2) eine beliebige andere geeignete Ausbildung haben.

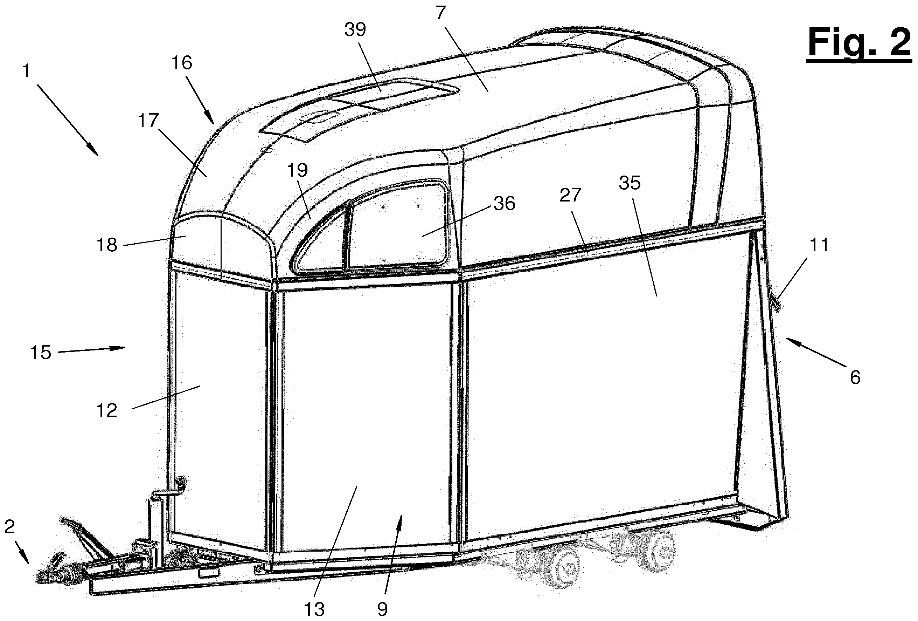

Der Aufbau (6) hat einen in Fahrtrichtung (53) vorn liegenden Frontbereich (15), der eine nach vorn gerichtete, seitlich und oben verjüngte Form (16) aufweist. Die Verjüngungen (16) befinden sich am Dach (7) und an der seitlichen Aufbauwandung (9). An der Front (5) weisen die Aufbauwandung (9) und das Dach (7) ebene und miteinander fluchtende Frontwände (12,18) auf. Die Frontwände (12,18) bilden eine gemeinsame frontseitige ebene Aufbaufläche. Figur 2 zeigt diese Ausbildung.

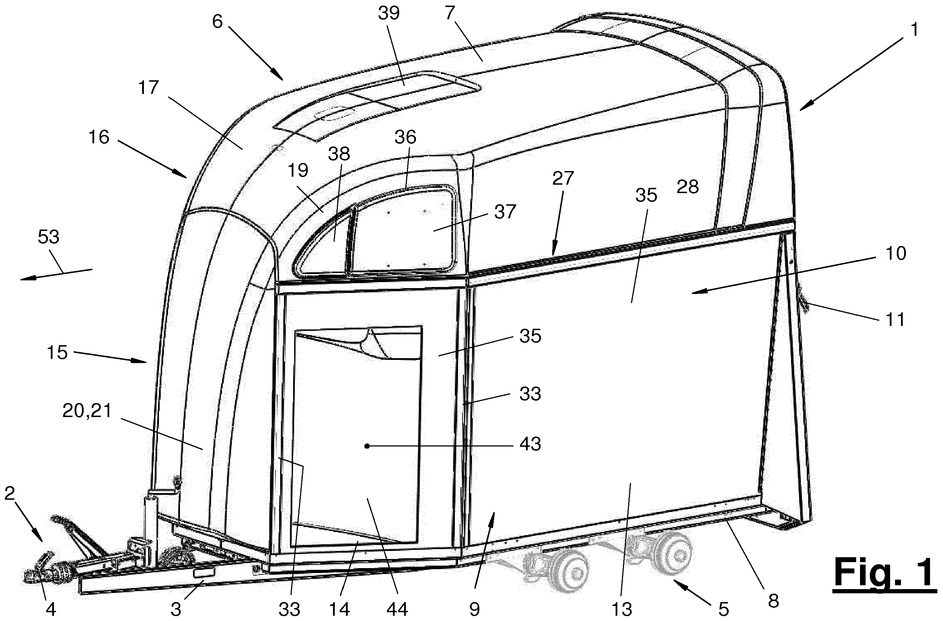

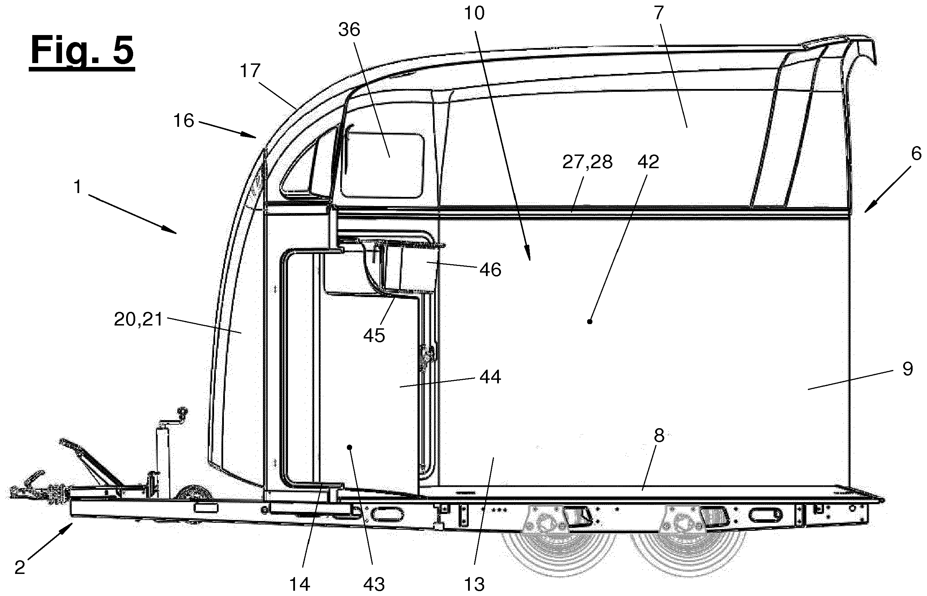

An den ebenen Frontwänden (12,18) kann eine gewölbte Bugschale (20) vorzugsweise lösbar befestigt (24,25) werden. Figur 1, 3 bis 6 und 8 zeigen diese Ausbildung. Die Bugschale (20) kann eine bis auf die Zugangsöffnung geschlossene Schalenform aufweisen. Die dünnwandige Schale besteht z.B. aus Kunststoff oder Metall.

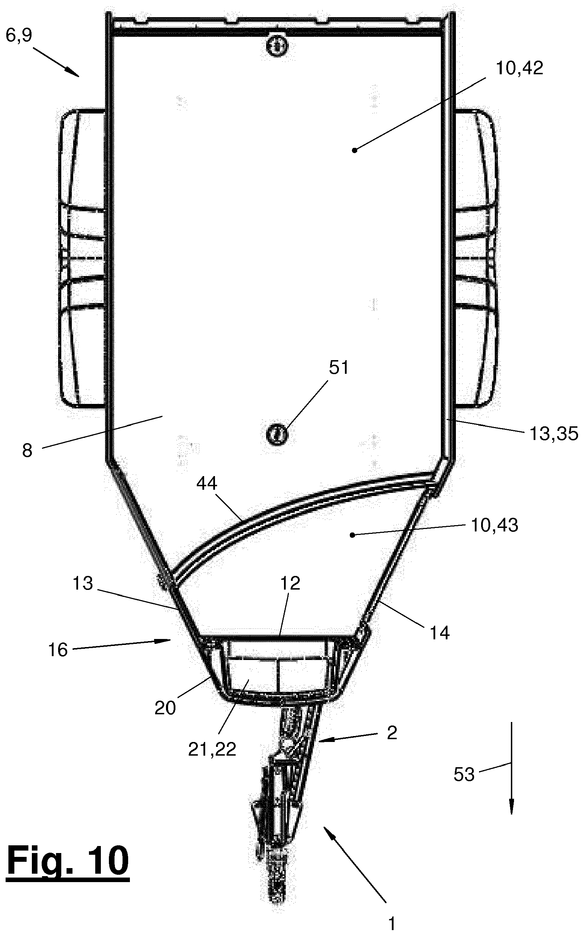

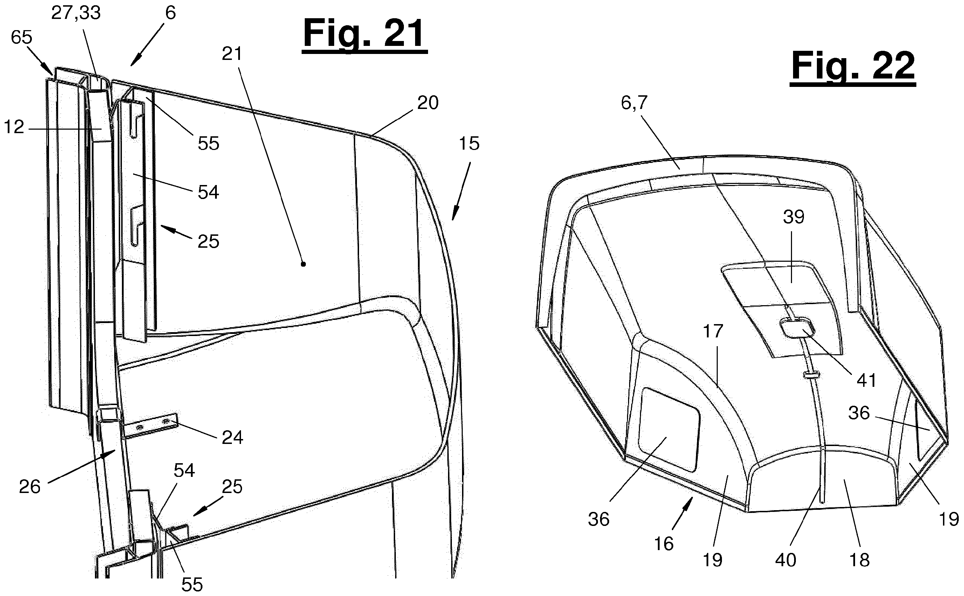

Das Dach (7) ist haubenförmig ausgebildet und hat an der Front im Bereich der Verjüngung (16) eine abwärts zur Frontwand (18) gerichtete Rundung (17). Die Rundung (17) ist vorzugsweise an der Oberseite des Dachs (7) angeordnet. Die Seitenwände (19) des Dachs (7) können im Bereich der Verjüngung (16) eine im Wesentlichen ebene Form haben, wie dies z.B. Figur 10 und 22 verdeutlichen. Die seitliche Aufbauwandung (9) besteht aus der besagten aufrechten Frontwand (12) und linken und rechten Seitenwänden (13), die im Bereich der Verjüngung (16) ebenfalls eine ebene Form haben können und mit den darüber angeordneten Seitenwänden (19) des Dachs (7) fluchten. Figur 10 zeigt in der Draufsicht die seitlich abgewinkelte Form der Seitenwände (13). Die Front- und Seitenwände (12, 13) können von Paneelen (35) gebildet werden, die durch den Ringanker (27) und ggf. bodenseitige Aufnahmen sowie den Heckrahmen gehalten werden.

Die Paneele (35) können aus unterschiedlichen Materialien bestehen, z.B. aus Leichtmetall, einem Holzwerkstoff oder aus Kunststoff, ggf. in einer Verbundbauweise. Die verschiedenen Varianten können im Baukastensystem wahlweise eingesetzt werden.

Ein Leichtmetallpaneel kann z.B. aus einem einzelnen plattenförmigen Profil oder aus mehreren verbundenen leistenartigen Hohlprofilen gebildet werden. Ein Holzpaneel kann von einer einzelnen oder von mehreren Holzplatten, gegebenenfalls auch verleimten Schichtholzplatten gebildet werden. Ein Kunststoffpaneel, welches auch als Polypaneel bezeichnet wird, kann aus einer stützenden Innenschicht, z.B. einer Holzplatte und einer an ein oder beiden Außenseiten aufgebrachten Kunststoffschicht, z.B. aus Polyester, bestehen. Das haubenförmige Dach (7) kann ebenfalls aus Kunststoff bestehen, z.B. aus Polyester. Es kann in der bevorzugten Ausführungsform einteilig in einem Laminierverfahren hergestellt werden.

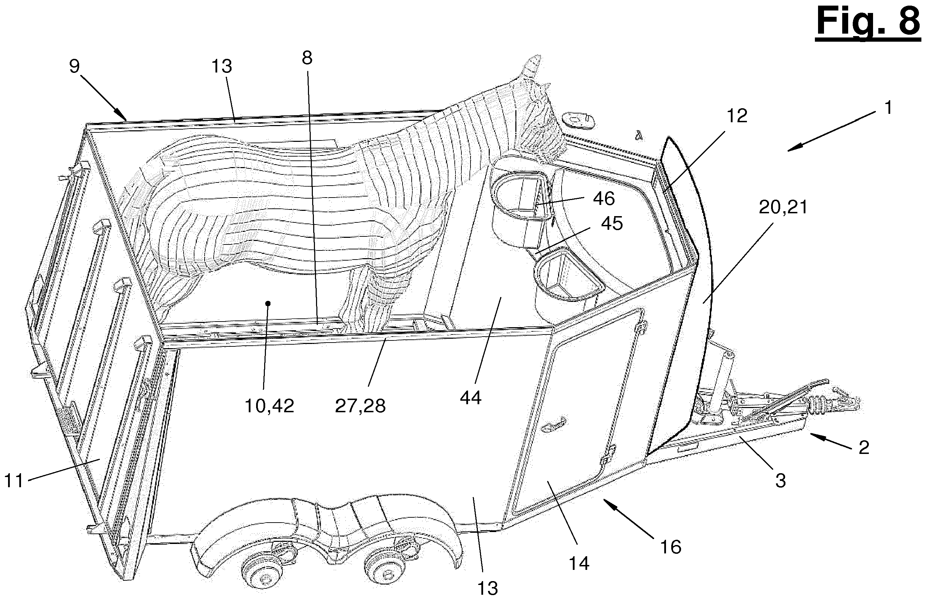

Der Aufbau (6) weist am Frontbereich (15) eine nach vorn vorspringende Aufnahmekammer (21) auf, die den Innenraum (10) vergrößert und zusätzlichen Stauraum bietet. Wie Figur 8 und 10 verdeutlichen, kann bei einem Pferdeanhänger (1) im vorderen Bereich des Innenraums (10) eine quer oder schräg zur Fahrtrichtung (53) verlaufende Trennwand (44) angeordnet sein, die den Innenraum (10) in einem hinteren Standbereich (42) für ein oder mehrere Pferde und in einen vorderen Vorraum (43), insbesondere eine sog. Sattelkammer, unterteilt. Die Aufnahmekammer (21) mündet an diesem Vorraum (43) bzw. an der Sattelkammer und vergrößert den hier verfügbaren Raum. Die Aufnahmekammer (21) befindet sich vor einer Wandöffnung (26) in der Frontwand (12) und ist durch diese hindurch erreichbar. Die Aufnahmekammer (12) kann leer sein, oder Einbauten, z.B. Regale, Aufhänger, Tragstangen oder dgl., aufweisen.

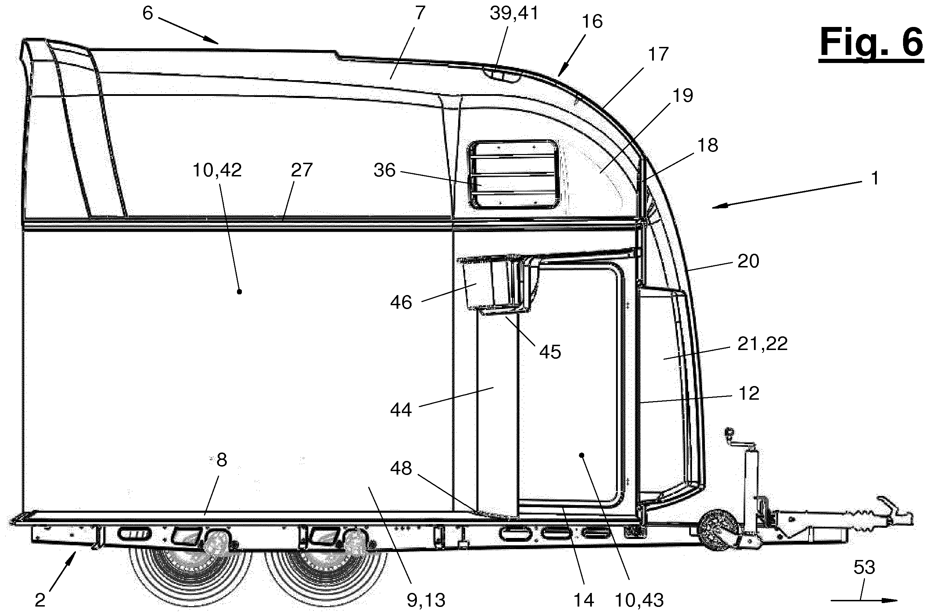

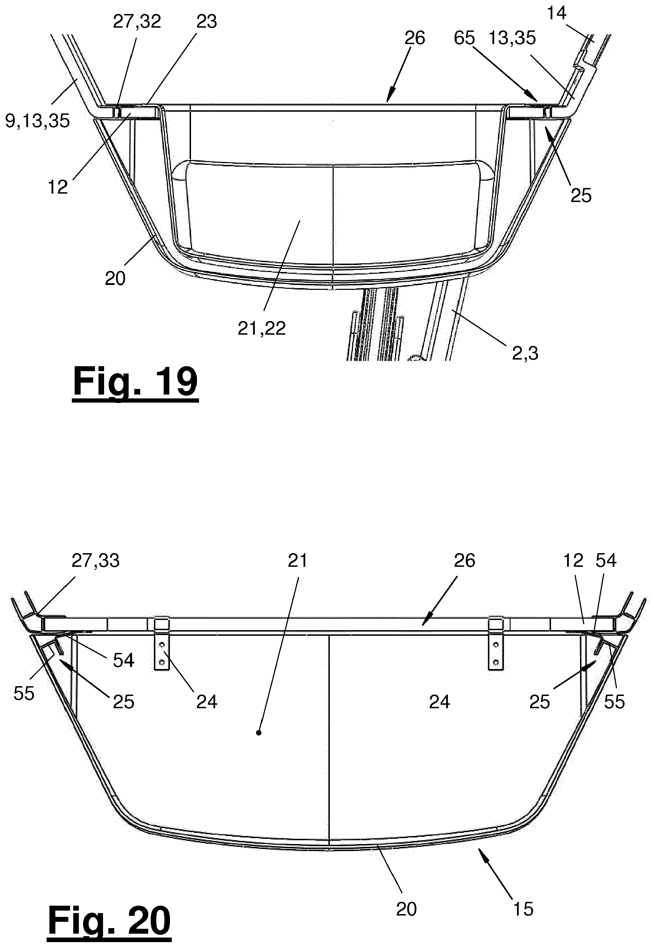

Für die Ausgestaltung der Aufnahmekammer (21) gibt es verschiedene Möglichkeiten. Die Aufnahmekammer (21) kann z.B. gemäß Figur 20 und 21 von der nach vorn gewölbten Bugschale (20) gebildet werden. Die Schalenwandung umgibt und definiert die Aufnahmekammer (21). In einer anderen Variante gemäß Figur 6, 7, 15 und 19 ist die Aufnahmekammer (21) als wannenförmiger Einsatz (22) ausgebildet und in oder an der Wandöffnung (26) befestigt. Der Einsatz (22) weist am Rand an einer oder mehreren Stellen, vorzugsweise umlaufend, einen nach außen abgewinkelten Randflansch (23) auf, der in Montagestellung an der Innenseite der Frontwand (12) anliegt sowie hier in geeigneter Weise und ggf. mit einer Abdichtung befestigt ist. Dies kann z.B. durch Kleben oder in lösbarer Weise durch Schrauben, Nieten oder dgl. erfolgen. Die Wanne des Einsatzes (22) ist an Form und Größe der Wandöffnung (26) angepasst und ragt durch diese hindurch. Der wannenförmige Einsatz (22) kann aus Kunststoff, Metall oder einem anderen geeigneten Werkstoff bestehen.

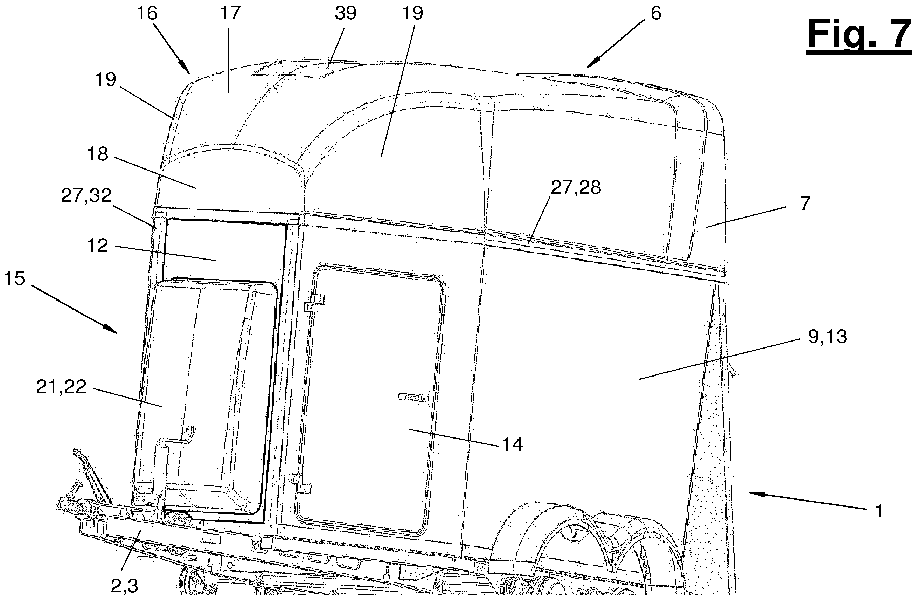

Wie Figur 7 verdeutlicht, kann die Aufnahmekammer (21) an einem Aufbau (6) ohne Bugschale (20) eingesetzt werden. Figur 6 verdeutlicht im Längsschnitt die andere Variante, in der der wannenförmige Einsatz (22) außenseitig von der montierten Bugschale (20) umgeben wird. Die Formgebung und insbesondere die Wölbung des Einsatzes (22) und der Bugschale (20) können zur maximalen Raumausnutzung aneinander angepasst sein. Durch die Bugschale (20) wird die Dichtigkeit der Aufnahmekammer (21) und des Vorraums bzw. der Sattelkammer (43) noch weiter verbessert.

Figur 1 und 3 bis 6 sowie 19 bis 21 verdeutlichen die Ausbildung und Anordnung der Bugschale (20). Die gewölbte Bugschale (20) überdeckt die ebenen Frontwände (12,18) und hat eine Öffnungsgröße, welche der Flächengröße der beiden Frontwände (12,18) entspricht. An ihrer Öffnungsseite hat die Bugschale (20) einen umlaufenden Rand, der eine zu den Frontwänden (12,18) parallele Anschlussebene aufspannt. In Montagestellung gehen die Bugschalenwände am Rand fließend bzw. tangential in die Verjüngung (16) und die Rundung (17) über. Insbesondere kann die vordere Bugschalenwand eine an die Rundung (17) angepasste Krümmung für einen fließenden Übergang aufweisen. Der Aufbau (6) mit der Bugschale (20) hat eine einheitliche harmonische äußere Kontur.

Wie die Draufsicht auf Figur 10 verdeutlicht, können die seitlichen Bugschalenwände eben sowie schräg nach außen gerichtet sein und in Montagestellung fluchtend an die schrägen bzw. verjüngten Seitenwände der Aufbauwandung (9) und ggf. auch an die verjüngten Seitenwände (19) des Dachs (7) fluchtend anschließen. An der umlaufenden Stoss- oder Übergangsstelle kann eine offene, sichtbare Fuge vorhanden sein, wie dies in Figur 1, 3 und 4 bis 6 gezeigt ist. Alternativ kann die Übergangsstelle mit einer Abdichtung verschlossen sein.

Die Bugschale (20) besitzt eine verdeckt angeordnete Befestigung (25). Figur 20 und 21 zeigen hierzu eine beispielhafte Ausgestaltung. Die Bugschale (20) kann in oder an der Wandöffnung (26) formschlüssig mit ein oder mehreren Stützelementen (24), z.B. den gezeigten Haken oder Haltebügeln, abgestützt sein. Ferner kann die Befestigung (25) aufrechte und abgewinkelte Profile (54,55) an der Frontwand (12) und an der Innenseite des Bugschalenrands aufweisen. Die Profile (54,55) können benachbarte und in Montagestellung aneinander plan anliegende Flansche oder Stege aufweisen, an denen eine Befestigung durch Schrauben, Nieten, Kleben oder auch auf andere geeignete Weise möglich ist.

Gemäß Figur 21 können z.B. an der Frontwand (12) angeordneten Stützprofile (54) Aufnahmeschlitze für die formschlüssige Einführung und Aufnahme von Bolzen oder dgl. an den bugschalenseitigen Stützprofilen (55) aufweisen. Hierüber kann eine einfache formschlüssige Verbindung beim Ansetzen und Einhängen der Bugschale (20) gebildet werden. Die Befestigung (25) kann lösbar sein. Ferner kann die Zuordnung umgekehrt sein.

In einer nicht dargestellten Abwandlung kann die Befestigung (25) Stützprofile (55) an der Innenseite und im Randbereich der Bugschale (20) aufweisen, die jeweils an eine vordere Stütze (32,33) beziehungsweise A-Säule in der Formgebung derart angepasst sind, dass sie dicht und formschlüssig anliegen und dort in geeigneter Weise dauerhaft oder lösbar befestigt werden können. Auf die Stützprofile (54) an der Frontwand (12) kann in diesem Fall verzichtet werden.

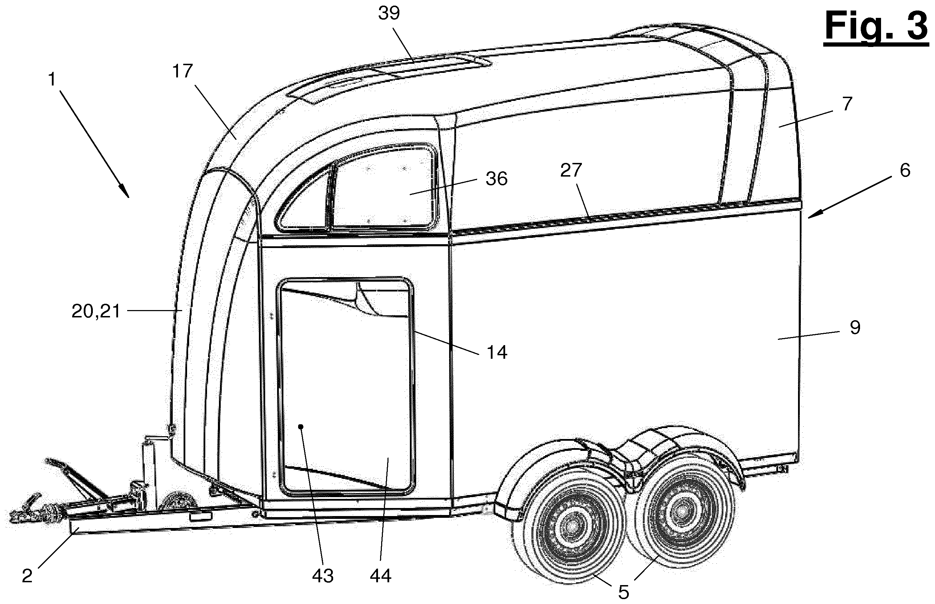

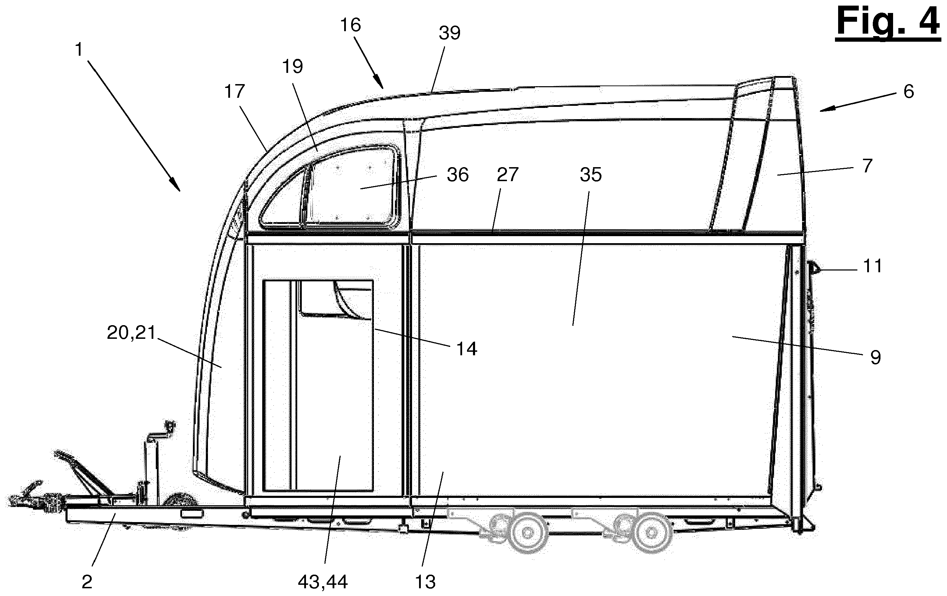

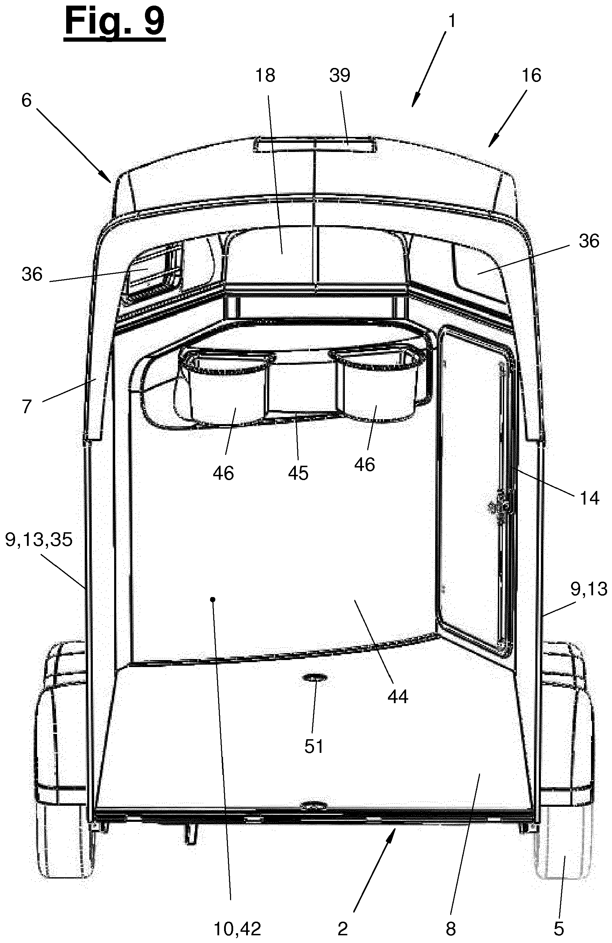

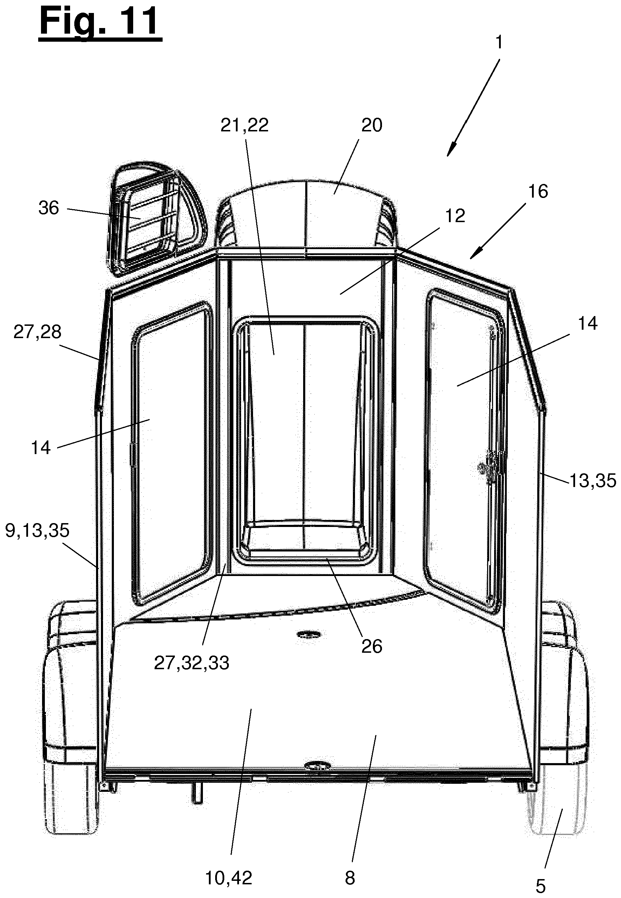

Alle Befestigungsvarianten (25) sind vorzugsweise verdeckt und können vom Innenraum der Bugschale (20) her montiert und fixiert werden. Durch die frontseitige Wandöffnung (26) sind die Befestigungsstellen erreichbar, wobei Schrauben oder dergleichen Befestigungselemente von der Bugseite her eingebracht werden. Ein eventueller wannenförmiger Einsatz (22) fehlt dabei zunächst und wird anschließend montiert. Er kann wie erwähnt auch entfallen. Der Aufbau (6), insbesondere die seitliche Aufbauwandung (9) kann eine oder mehrere Seitentüren (14) aufweisen, die bevorzugt im Bereich der Verjüngung (16) angeordnet ist/sind. Wie Figur 8 und 9 verdeutlichen, ist hierüber ein Zugang zum Standbereich (42) und zum Vorraum bzw. zur Sattelkammer (43) möglich. Figur 11 zeigt ebenfalls eine Doppelanordnung von Seitentüren (14). Auf eine Seitentüre kann gemäß Figur 2 auch verzichtet werden. Die Seitentüre (14) kann einen rechteckigen Türrahmen gemäß Figur 1 und 4 aufweisen. Bevorzugt wird ein an den Ecken gebogener Türrahmen, wie er in Figur 3 und 5 bis 11 dargestellt ist. Der Türrahmen kann aus einem einstückigen oder mehrstückigen gebogenen Leichtmetallprofil gebildet werden und wird in einem entsprechend geformten Ausschnitt des betreffenden Paneels (35) befestigt.

An der Seitenwandung des Dachs (7), vorzugsweise an den vorderen Seitenwänden (19) im Bereich der Verjüngung (16) kann an einer oder beiden Dachseiten jeweils ein Fenster (36) angeordnet sein. Das Fenster (36) kann durchsichtig oder undurchsichtig sein und kann auch von einer Klappe gebildet werden. Wie Figur 1 bis 4 verdeutlichen, hat das Fenster (36) eine nach vorn sich verjüngende Form. Diese kann einen oberen gebogenen Rand aufweisen, der parallel zur Rundung (17) verläuft und die Formgebung des Dachs aufnimmt. Das Fenster (36) kann mehrteilig ausgebildet sein und einen vorderen dreieckförmigen Fensterteil (38) und einen hinteren rechteck- oder trapezförmigen Fensterteil (37) aufweisen. Die Fensterteile (37,38) können miteinander verbunden sein und als Einheit bewegt werden, in dem sie z.B. mit einem geeigneten Gestänge in Querrichtung von der Seitenwand (19) abgehoben werden. Zwischen den Fensterteilen (37,38) kann eine optische Unterteilung bestehen.

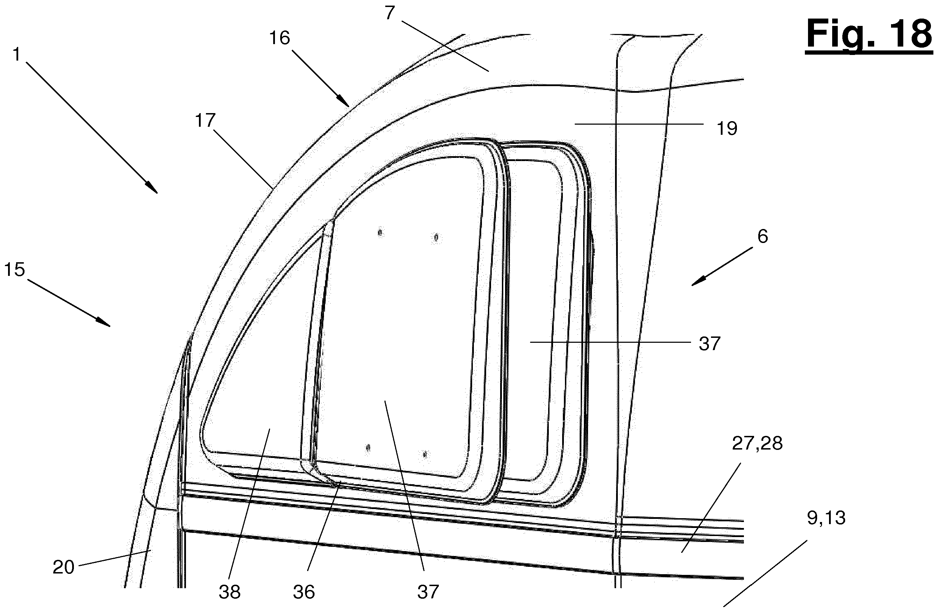

In einer anderen Variante eines mehrteiligen Fensters (36) kann der vordere Fensterteil (38) fest am Dach (7) angeordnet sein, wobei das hintere Fensterteil (37) beweglich und insbesondere ausstellbar angeordnet ist. Es kann hierbei um ein Scharnier am hinteren aufrechten Rand des vorderen Fensterteils (38) drehbar sein. Figur 18 zeigt ein solches mehrteiliges Fenster (36) mit einem beweglichen hinteren Fensterteil (37) in ausgestellter Öffnungsstellung und in Schließstellung.

Durch ein geöffnetes Fenster (36) kann der Innenraum (10) belüftet werden. Am Heck ist ein Luftaustausch durch einen Freiraum zwischen der Heckklappe (11) und dem oberen Dachrand möglich, wobei hier ggf. ein Windschutznetz und/oder ein Rollo angeordnet ist.

Wie Figur 9 und 11 verdeutlichen, kann in der Seitenwand (19) des Dachs (7) ein im Wesentlichen rechteckiger Ausschnitt mit einem Rahmeneinsatz angeordnet sein, dessen Fläche kleiner als diejenige des außenseitigen Fensters (36) ist. Gemäß Figur 7 kann auf ein Fenster (36) alternativ auch verzichtet werden.

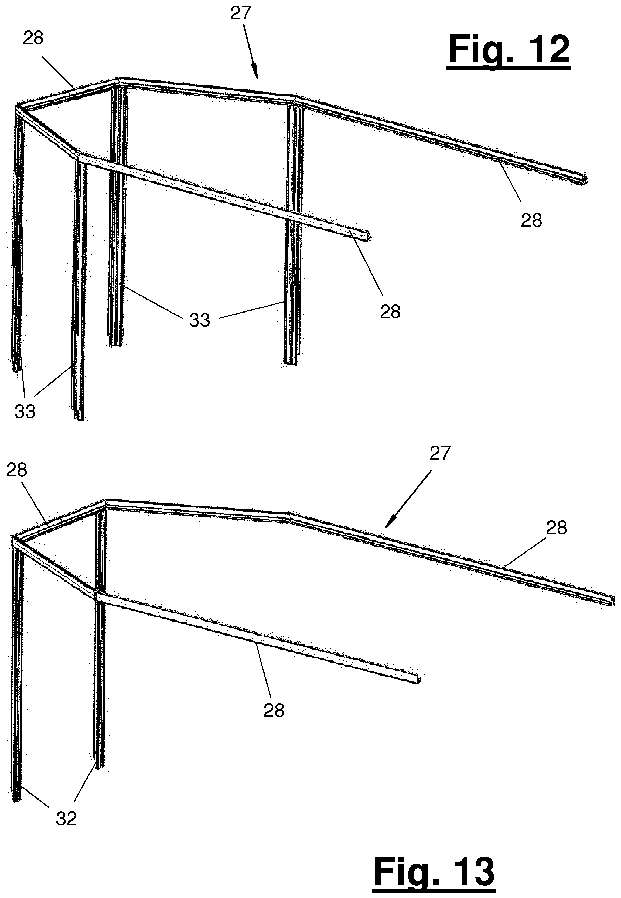

Figur 12 und 13 verdeutlichen den vorerwähnten Ringanker (27). Er besteht aus einem vorn und seitlich umlaufenden Aufnahmeprofil (28), welches die Aufbauwandung (9) und das Dach (7) formschlüssig aufnimmt. Außerdem sind am Aufnahmeprofil (28) senkrecht nach unten zum Boden (8) abstehende Stützen (32,33) angeordnet und befestigt, welche der Aufnahme von Paneelen (35) der Aufbauwandung (9) dienen.

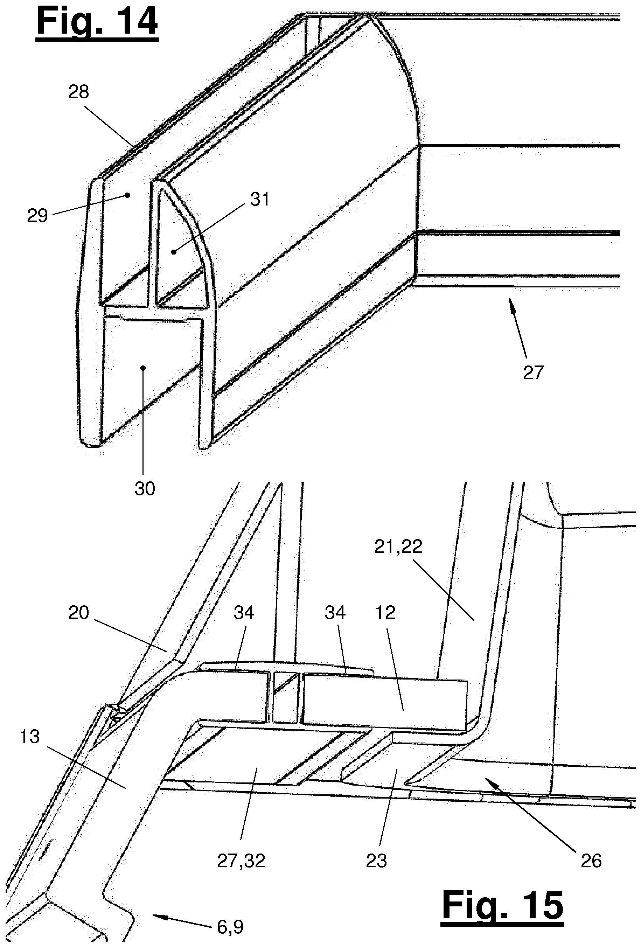

Das Aufnahmeprofil (28) ist in Figur 14 ausschnittsweise dargestellt und besteht z.B. aus einem Leichtmetallprofil. Dieses kann einstückig gebogen oder aus mehreren geraden oder gebogenen Profilstücken zusammen gesetzt sein. Das Aufnahmeprofil (28) weist eine obere Aufnahmenut (29) für den Rand des Dachs (7) und eine untere breitere Aufnahmenut (30) für die Paneele (35) auf. Die aus unterschiedlichen Materialien herstellbaren Paneele (35) habe eine einheitliche Wanddicke und passen allesamt in die Aufnahmenut (30). Im Rahmen des Baukastensystems kann ein gleiches Aufnahmeprofil (28) eingesetzt werden.

Das Aufnahmeprofil (28) kann ferner einen durchgehenden oder stellenweise angeordneten Kabelkanal (31) aufweisen, der z.B. neben der schmäleren oberen Aufnahmenut (29) angeordnet ist.

Die Stützen (32,33) können je nach Art der Aufbauwandung (9) und der Paneele (35) in unterschiedlicher Weise ausgebildet und an unterschiedlichen Stellen angeordnet sein. Sie sind oben am Aufnahmeprofil (28) und unten am Boden (8) bzw. dortigen Beschlägen befestigt und tragen die auf die die Aufbauwandung (9) im Stand- und Fahrbetrieb einwirkenden Kräfte am Boden (8) ab.

Figur 12 zeigt einen Ringanker (27) für bevorzugt ebene Paneele (35) aus Leichtmetall oder einem Holzwerkstoff. In diesem Fall sind zwei vordere Stützen (33) an den Frontecken des Aufnahmeprofils (28) angeordnet, welche das Paneel (35) der Frontwand (12) zwischen sich aufnehmen. Diese vorderen Stützen oder Säulen (33) werden auch als A-Säulen bezeichnet. Zwei weitere hintere Stützen (33), sog. B-Säulen, sind am Übergang der Verjüngung (16) in die parallelen Seitenwandbereiche angeordnet. Zwischen den vorderen und den hinteren Stützen (33) werden jeweils die Paneele (35) der Seitenwände (13) im Verjüngungsbereich (16) aufgenommen. Die in Fahrtrichtung hinteren Paneele der Seitenwände (13) sind an einem Heckrahmen und an den hinteren Stützen (33) angeordnet und befestigt. An der Unterseite können die Paneele (35) in geeigneten Profilen oder dgl. am Boden (8) aufgenommen bzw. gehalten sein.

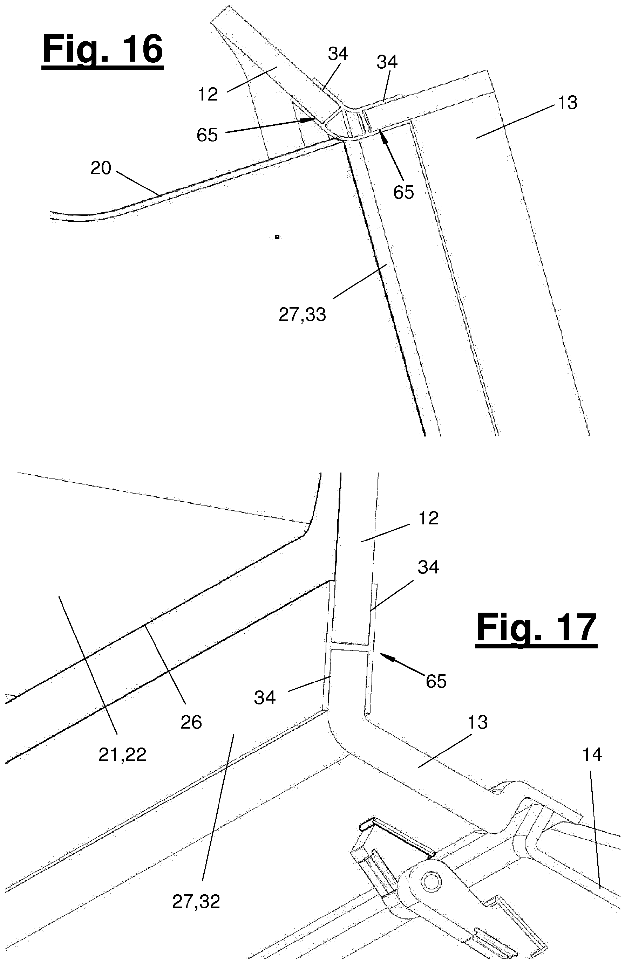

Figur 16 und 20 verdeutlichen die im Querschnitt gebogene Ausbildung dieser Stützen bzw. Eckstützen (33). Diese weisen jeweils einen mittleren Stegbereich und endseitige sowie schräg zueinander ausgerichtete Aufnahmenuten (34) zum Einstecken der aufrechten Paneelränder auf. Eine dortige Befestigung kann durch Kleben oder dgl. erfolgen.

Figur 13 zeigt einen Ringanker (27), der für Paneele (35) aus Kunststoff, insbesondere Polypaneele, vorgesehen ist. Ein solcher Ringanker (27) kann mit den beiden vorderen Stützen (32) bzw. A-Säulen auskommen und im Gegensatz zu Figur 12 auf zusätzliche hintere Stützen bzw. B-Säulen verzichten. Die zur Verjüngung (16) abgewinkelte Seitenwand (13) hat in diesem Fall eine ausreichende Eigenstabilität. Ansonsten kann der Ringanker (27) das gleiche Aufnahmeprofil wie in Figur 12 haben.

Figur 15 und 17 verdeutlichen die Ausbildung dieser Stützen (32), die in der Draufsicht eine gerade H-Form haben können. Sie weisen einen zentralen Stegbereich und beidseitige fluchtende Aufnahmenuten (34) auf. Diese Stützen oder H-Stützen (32) sind in einem geraden Paneelbereich angeordnet und können von den Ecken des Aufnahmeprofils (28) distanziert sein. In diesem Fall kann z.B. das Paneel der Seitenwand (13) am frontseitigen Ende eine Abkantung gemäß Figur 15 und 17 aufweisen.

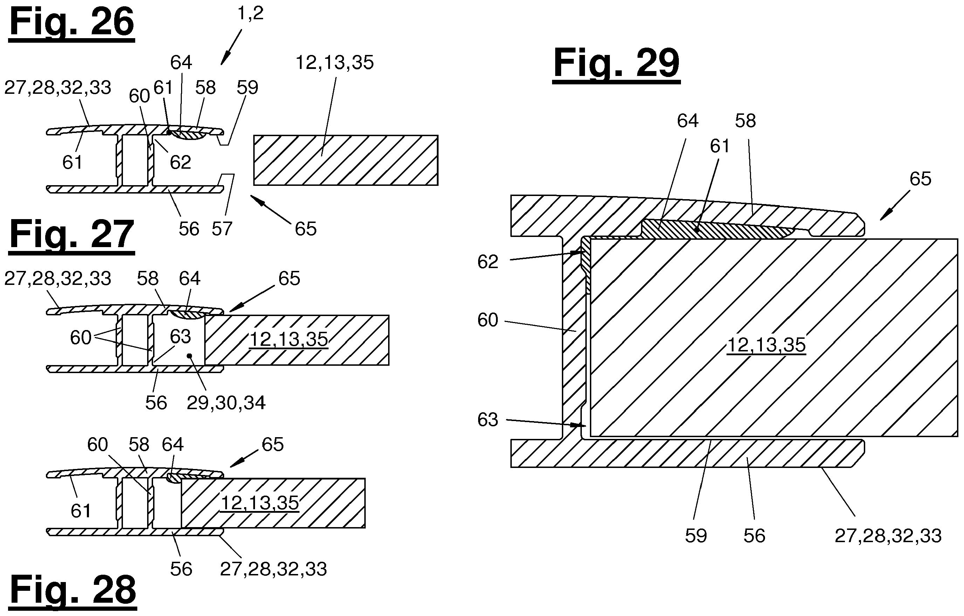

Figur 26 bis 29 zeigen eine Dichtungsanordnung (65) für die vorgenannten Aufnahmeprofile (28) und/oder Stützen (32,33) bzw. Stützprofile und/oder die bodenseitigen Aufnahmen bzw. den Heckrahmen und die dort in eine Aufnahmenut (29,30,34) eingesteckten Wandungsteile, insbesondere Frontwände (12,13) bzw. Paneele (35).

Die Aufnahmenut (29,30,34) wird seitlich durch die Seitenwände (56,58) sowie endseitig durch eine Mittelwand (60) begrenzt. Die Mittelwand (60) bildet einen Aufnahmegrund, also eine Anlagefläche für die Stirnseite eines Wandungsteils (12, 13, 35). Die Seitenwände (56, 58) haben innen liegende Oberflächen, die als Anlageflächen (57, 59) dienen. In einer oder beiden Seitenwänden (56, 58) ist eine rinnenartige Ausnehmung (61) eingeformt. Die Ausnehmung (61) überdeckt in der Einschubrichtung nur einen Teilbereich der jeweiligen Anlagefläche (57, 59), wobei die in Einschubrichtung vor und/oder hinter der Ausnehmung (61) liegenden Flächenteile der Anlagefläche (57, 59) als Führung für das Wandungsteil (12, 13, 35) dienen.

In Figuren 26 bis 28 ist ein Vorgang des Zusammenfügens eines Profils (28, 32, 33) mit einem Wandungsteil (12, 13, 35) dargestellt. In der Ausnehmung (61) der z.B. äußeren Seitenwand (58) befindet sich ein Klebe- oder Dichtmittel (64), das über die Anlagefläche (57, 59) in den Nutenhohlraum ragt. Es wird bevorzugt als Klebewulst oder Kleberaupe aufgebracht und erstreckt sich über die gesamte Länge der zu erstellenden Klebe- oder Dichtverbindung. Es kann insbesondere ein zähflüssiger Kleb- oder Dichtstoff eingesetzt werden, wie beispielsweise Silikon.

Das Wandungsteil (12, 13, 35) weist eine Stirnseite, eine Außenseite und eine Innenseite sowie Frontkanten auf. Die Außenseite ist üblicherweise die Seite, die am Aufbau (6) nach außen bzw. in die Aufnahmekammer (21) weist, während die Innenseite zum Innenraum (10) des Anhängers (1) weist. Beim Einschieben des Wandungsteils (12, 13, 35) kommt zunächst die äußere Frontkante in Kontakt mit dem Klebe- oder Dichtmittel (64). Da das Klebe- oder Dichtmittel (64) in einer gegenüber der Anlagefläche (59) zurückversetzten Ausnehmung (61) angeordnet ist, wird verhindert, dass die äußere Frontkante das Klebe- oder Dichtmittel (64) an der Seitenwand (58) entlangschiebt. Es wird vielmehr erreicht, dass die äußere Frontkante in das Klebe- oder Dichtmittel (64) eintaucht und nur einen Teil des Klebe- oder Dichtmittels, der über das Niveau der Anlagefläche (59) hinaus in die Aufnahmenut (29, 30, 34) hineinragt, mitnehmen kann.

Beim weiteren Einschieben des Wandungsteils (12, 13, 35) benetzt das Klebe- oder Dichtmittel (64) sowohl die Außenseite, als auch einen Bereich der Stirnseite sowie die dazwischen befindliche äußere Frontkante des Wandungsteils (12, 13, 35). Das Klebe- oder Dichtmittel (64) umschließt den gesamten äußeren Kantenbereich der Stirnseite und es ergibt sich eine Klebe- oder Dichtstelle, die in Figur 29 im Querschnitt dargestellt ist.

Das Profil (28, 32, 33) weist bevorzugt im Randbereich des Aufnahmegrundes (60) eine oder mehrere Nuten (62, 63) auf, in die ein Teil des von der Stirnseite (18) mitgenommenen Klebe- oder Dichtmittels (64) eingeschoben wird und sich in Längsrichtung der Frontkante verteilt. Durch die Nuten (62, 63) wird ferner eine die äußere Frontkante des Wandungsteils (12, 13, 35) umhüllende Verteilung des Klebe- oder Dichtmittels (64) begünstigt. Hierdurch kann sichergestellt werden, dass die Stirnseite des Wandungsteils (12, 13, 35) sicher gegen das Eindringen von Wasser oder anderen Fremdstoffen abgedichtet ist.

Alternativ oder zusätzlich zu der an der Außenseite der Wandung (12, 13, 35) vorgesehenen Klebe- und Dichtstelle kann eine Klebe- oder Dichtstelle an der Innenseite vorgesehen sein. Entsprechend kann ein Profil (28, 32, 33) in der inneren Seitenwand (56) eine entsprechende Ausnehmung (61) mit einem Klebe- oder Dichtmittel (64) aufweisen.

Figur 8 bis 10 sowie 23 und 24 verdeutlichen die Ausbildung und Anordnung der besagten Trennwand (44). Diese ist in Figur 3 bis 6 ebenfalls zumindest bereichsweise zu sehen. Die Trennwand (44) kann außer dem aufrechten Wandbereich einen oberen horizontalen Dachbereich aufweisen, der den Vorraum bzw. die Sattelkammer (43) überdeckt und nach oben hin abschließt. Die Trennwand (44) weist am oberen Rand eine zur Fahrzeugfront (15) zurück springende Stufe (45) auf, in der ein oder mehrere Futterbehälter (46) mittels einer vorzugsweise lösbaren Befestigung (47) aufgenommen werden können. Durch die Stufe (45) können die Futterbehälter (46) in Fahrtrichtung (53) nach vorn versetzt werden und befinden sich in einem vom eingestellten Pferd gut erreichbaren Bereich. Andererseits beengen sie den Standbereich (42) in seiner Längenausdehnung nicht oder nur unwesentlich. Die Stufe (45) kann am oberen Rand in den besagten Dachbereich übergehen.

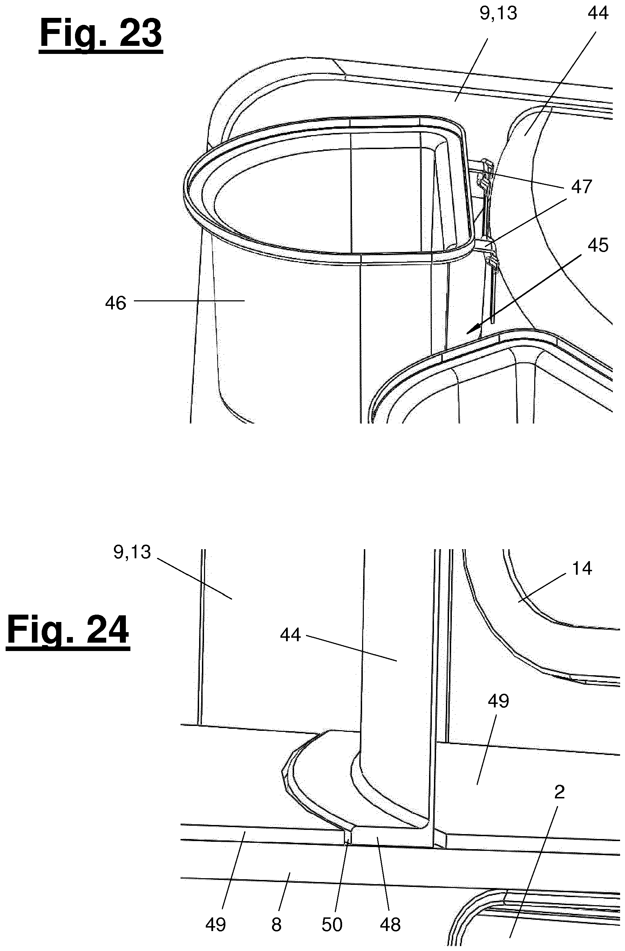

Die Trennwand (44) kann am unteren Rand einen quer nach vorn und/oder hinten abstehenden Wandsockel (48) aufweisen, der gemäß Figur 24 in einem ausgesparten Bereich eines Verschleiß- oder Bodenbelags (49) angeordnet und direkt am Boden (8) aufgestellt und in geeigneter Weise befestigt ist. Die Ränder des Bodenbelags (49) und der zugewandte Rand des Wandsockels (48) haben eine gleichartige Kontur, wobei zwischen ihnen ein vertikaler Spalt (50) mit einer versenkten Dichtung (nicht dargestellt) angeordnet ist. Hierdurch wird ein stumpfer Stoß mit Abdichtung gebildet, der eine besonders gute Dichtigkeit für den darunter liegenden Boden (8) gewährleistet. Die Trennwand (44) bzw. der Wandsockel (48) können gemäß Figur 10 und 24 einen gebogenen Verlauf haben, dem auch der Spalt mit der versenkbaren Dichtung (50) folgt.

Das Dach (7) weist an der Innenseite gemäß Figur 22 eine Leitungsführung (44) auf, die z.B. als Leerrohr ausgebildet ist und zur Aufnahme von elektrischen oder sonstigen Versorgungsleitungen dient. Die Leitungsführung (40) ist zentral angeordnet und längs der Fahrtrichtung (53) ausgerichtet, wobei sie sich vom unteren Rand der dachseitigen Frontwand (18) über die Rundung (17) nach hinten erstreckt. Sie kann mit einem dachinnenseitig angeordneten Adapter (41) verbunden sein, der z.B. kastenförmig ausgebildet ist und eine elektrische Schaltdose aufnehmen kann. Er kann auch die Anbaufläche für eine Innenraumbeleuchtung bieten. Die Leitungsführung (40) kann sich über den Adapter (41) hinaus noch ein Stück nach hinten erstrecken.

Gemäß Figur 1 bis 3 und 22 kann das Dach (7) im vorderen Bereich und an der Oberseite eine vertiefte Mulde (39) aufweisen, die bedarfsweise für Dacheinbauten, z.B. für eine Dachbelüftung oder dergleichen, dienen kann. Der Muldenboden kann hierfür gegebenenfalls aufgeschnitten werden. Ein vorderer Teil der Mulde (39) kann im Bereich der Rundung (17) und ein hinterer Teil im Bereich der im Wesentlichen horizontalen Dachoberwand angeordnet sein. Ein Quersteg kann für eine Unterteilung sorgen. Am vorderen Muldenteil kann an der Unterseite der Adapter (41) angeordnet sein. Der hintere Muldenteil kann für Dacheinbauten herangezogen werden. Die Leitungsführung (40) reicht bis zu dem hinteren Muldenteil.

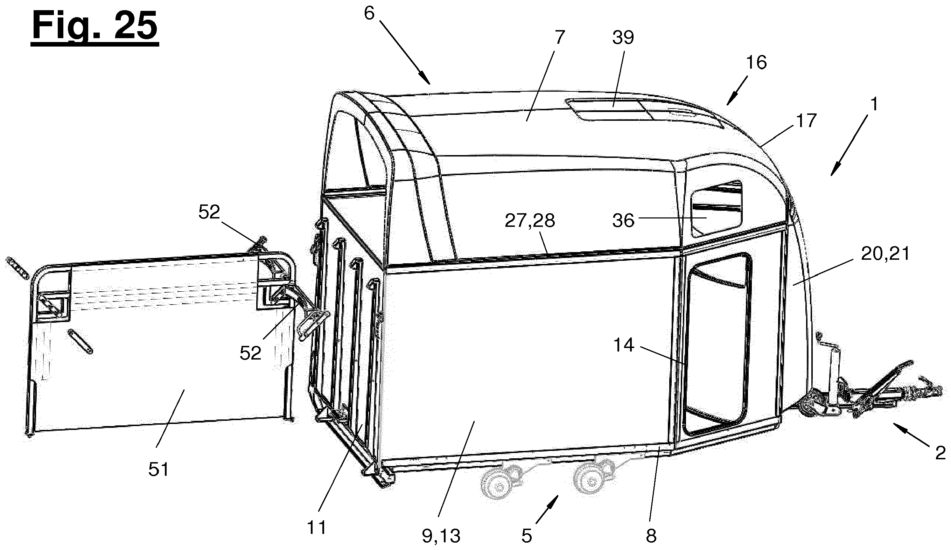

Figur 25 verdeutlicht in einer explosionsartig herausgezogenen Darstellung eine längs gerichtete wandartige Unterteilung (51) des Innenraums bzw. Standbereichs (42), mit der eine Boxentrennung für zwei Pferde gebildet wird. Die Unterteilung (51) kann mittels vorderer und hinterer Stützen am Boden (8) und dortigen geeigneten Aufnahmepunkten gemäß Figur 9 bis 11 befestigt werden. An der Unterteilung (51) können an der Frontseite links und rechts jeweils eine Bruststange (52) angeordnet sein, die gegebenenfalls mit einem Schnellverschluss fixiert und gelöst werden kann und die außerdem in der Höhe und in der Längsposition verstellt werden kann.

Abwandlungen der gezeigten und beschriebenen Ausführungsformen sind in verschiedener Weise möglich. Insbesondere können die Einzelmerkmale der verschiedenen Ausführungsbeispiele untereinander vertauscht oder miteinander kombiniert werden. Es können Zwischenformen der gezeigten und beschriebenen Ausführungsbeispiele gebildet werden. Einzelmerkmale können bei anderen Ausführungen entfallen. Die Ausgestaltungen des Ringankers (27), des Fensters (36), der Trennwand (44) mit der Stufe (45) sowie der Trennwand (44) mit dem Wandsockel (48), der Seitentüre (14) mit dem gebogenen Türrahmen, der Leitungsführung (40), der Mulde (39) und der einteiligen hauben- oder schalenförmigen Ausbildung des Dachs (7) sowie der Dichtungsanordnung (65) haben jeweils eine eigenständige erfinderische Bedeutung und können auch bei beliebigen anderen Fahrzeuganhängern, insbesondere Pferdeanhängern, eingesetzt werden. Die vorgenannten selbstständigen Erfindungsmerkmale können dabei einzeln oder in beliebiger Kombination miteinander sowohl für konventionelle, als auch für erfindungsgemäße Fahrzeuganhänger (1) Verwendung finden.

Ein solcher konventioneller Fahrzeuganhänger kann z.B. ein Pferdeanhänger gemäß des eingangs genannten Standes der Technik, insbesondere der GB 2 457 896 A, der FR 2 932 433 A oder der DE 81 06 717 U1 sein. Der Fahrzeuganhänger, insbesondere Pferdeanhänger, hat für die Kombination mit dem oder den eigenständigen Erfindungsmerkmal(en) ein Fahrgestell mit einem festen, einen Innenraum umgebenden Aufbau, welcher einen Boden, eine seitliche Aufbauwandung und ggf. ein Dach aufweist. Der Aufbau kann zudem ein oder mehrere Steckprofile mit einer oder mehreren Aufnahmenuten für ein oder mehrere Wandungsteile, insbesondere Paneele, aufweisen. Dies kann insbesondere für die Dichtungsanordnung (65) vorgesehen sein.

### BEZUGSZEICHENLISTE

- 1: Fahrzeuganhänger, Pferdeanhänger
- 2: Fahrgestell
- 3: Deichsel
- 4: Anhängevorrichtung
- 5: Fahrzeugrad
- 6: Aufbau
- 7: Dach, Dachhaube
- 8: Boden
- 9: Aufbauwandung
- 10: Innenraum
- 11: Heckwand, Heckklappe
- 12: Frontwand
- 13: Seitenwand
- 14: Seitentüre
- 15: Frontbereich Aufbau
- 16: Verjüngung
- 17: Rundung
- 18: Frontwand Dach
- 19: Seitenwand Dach
- 20: Bug, Bugschale
- 21: Aufnahmekammer
- 22: wannenförmiger Einsatz
- 23: Randflansch
- 24: Stützelement, Stützhaken
- 25: Befestigung
- 26: Wandöffnung
- 27: Ringanker
- 28: Aufnahmeprofil
- 29: Aufnahmenut oben
- 30: Aufnahmenut unten
- 31: Kabelkanal
- 32: Stütze, H-Stütze
- 33: Stütze, Eckstütze
- 34: Aufnahmenut
- 35: Paneel
- 36: Fenster
- 37: Fensterteil ausstellbar
- 38: Fensterteil fest
- 39: Mulde
- 40: Leitungsführung, Leerrohr
- 41: Adapter
- 42: Standbereich
- 43: Vorraum, Sattelkammer
- 44: Trennwand
- 45: Stufe
- 46: Futterbehälter
- 47: Befestigung
- 48: Wandsockel
- 49: Bodenbelag
- 50: Dichtung
- 51: Unterteilung Innenraum
- 52: Bruststange
- 53: Fahrtrichtung
- 54: Profil, Stützprofil
- 55: Profil, Stützprofil
- 56: Seitenwand innenseitig
- 57: Anlagefläche innen
- 58: Seitenwand außenseitig
- 59: Anlagefläche außen
- 60: Aufnahmegrund
- 61: Ausnehmung
- 62: Nut
- 63: Nut
- 64: Dichtmittel
- 65: Dichtungsanordnung

## Patentansprüche

1. Fahrzeuganhänger, insbesondere Pferdeanhänger, mit einem Fahrgestell (2) und einem festen, einen Innenraum (10) umgebenden Aufbau (6), welcher einen Boden (8), eine seitliche Aufbauwandung (9) und ein Dach (7) aufweist, wobei der Aufbau (6) einen seitlich und oben verjüngten (16) Frontbereich (15) mit fluchtenden ebenen Frontwänden (12,18) an der Aufbauwandung (9) und am Dach (7) aufweist, **dadurch gekennzeichnet, dass** der Aufbau (6) am Frontbereich (15) eine nach vorn über die Frontwand (12) vorspringende und den Innenraum (10), insbesondere eine frontseitige Sattelkammer (43), vergrößernde Aufnahmekammer (21) aufweist.

2. Fahrzeuganhänger nach Anspruch 1, **dadurch gekennzeichnet, dass** das Dach (7) haubenförmig ausgebildet ist und an der Front im Bereich der Verjüngung (16) eine abwärts zur Frontwand (18) gerichtete Rundung (17) aufweist.

3. Fahrzeuganhänger nach Anspruch 1 oder 2, **dadurch gekennzeichnet, dass** der Aufbau (6) eine frontseitig vor den Frontwänden (12, 18) angeordnete gewölbte Bugschale (20) aufweist.

4. Fahrzeuganhänger nach nach Anspruch 1, 2 oder 3, **dadurch gekennzeichnet, dass** die Aufnahmekammer (21) als wannenförmiger und in einer Wandöffnung (26) der Frontwand (12) befestigbarer Einsatz (22) ausgebildet ist.

5. Fahrzeuganhänger nach Anspruch 3, **dadurch gekennzeichnet, dass** die Bugschale (20) die Aufnahmekammer (21), insbesondere den Einsatz (22), außenseitig umgibt.

6. Fahrzeuganhänger nach Anspruch 3 oder 5, **dadurch gekennzeichnet, dass** die gewölbte Bugschale (20) die Frontwände (12, 18) überdeckt und randseitig tangential an die Verjüngung (16) und die Rundung (17) anschließt sowie mit einer Fuge oder dicht an die seitliche Aufbauwandung (9) und das Dach (7) anschließt.

7. Fahrzeuganhänger nach einem der Ansprüche 3, 5 oder 6, **dadurch gekennzeichnet, dass** die Bugschale (20) eine verdeckt angeordnete Befestigung (25) aufweist.

8. Fahrzeuganhänger nach einem der Ansprüche 3, 5, 6 oder 7, **dadurch gekennzeichnet, dass** die Bugschale (20) in oder an einer Wandöffnung (26) der Frontwand (12) der seitlichen Aufbauwandung (9) formschlüssig abgestützt (24) ist.

9. Fahrzeuganhänger nach Anspruch 7 oder 8, **dadurch gekennzeichnet, dass** die Befestigung (25) aufrechte und abgewinkelte Profile (54, 55) an der Frontwand (12) und an der Innenseite des Bugschalenrands aufweist, wobei die Profile (54, 55) in Montagestellung plan aneinander anliegende Flansche oder Stege zur gegenseitigen Befestigung aufweisen.

10. Fahrzeuganhänger nach einem der vorhergehenden Ansprüche, **dadurch gekennzeichnet, dass** der Aufbau (6) einen Ringanker (26) zwischen der Aufbauwandung (9) und dem Dach (7) aufweist.

11. Fahrzeuganhänger nach Anspruch 10, **dadurch gekennzeichnet, dass** der Ringanker (26) ein umlaufendes Aufnahmeprofil (28) für die Aufbauwandung (9) und das Dach (7) sowie nach unten zum Boden (8) abstehende Stützen (32, 33) für bevorzugt ebene Paneele (35) der Aufbauwandung (9) aufweist.

12. Fahrzeuganhänger nach Anspruch 11, **dadurch gekennzeichnet, dass** das Aufnahmeprofil (28) obere und untere Aufnahmenuten (29,39) für das vorzugsweise einteilige Dach (7) und für Paneele (35) der Aufbauwandung (9) aufweist.

13. Fahrzeuganhänger nach Anspruch 11 oder 12, **dadurch gekennzeichnet, dass** aufrechte Stützen (32, 33) im Querschnitt eine gerade oder abgewinkelte H-Form mit beidseitigen Aufnahmenuten (34) für Paneele (35) aufweisen.

14. Fahrzeuganhänger nach Anspruch 12 oder 13, **dadurch gekennzeichnet, dass** ein Aufnahmeprofil (28) und/oder eine Stütze (32, 33) eine in die Aufnahmenut (29, 30, 34) integrierte Dichtungsanordnung (65), insbesondere mit einer rinnenartigen Ausnehmung (61) an einer Seitenwand (56, 58) und einem dortigen Klebe- oder Dichtmittel (64) aufweist.

## Claims

1. Vehicle trailer, in particular horsebox trailer, with a chassis (2) and a fixed body (6) which surrounds an interior space (10) and has a floor (8), a lateral body wall (9) and a roof (7), wherein the body (6) has a laterally and upwardly tapered (16) front region (15) with aligning flat front walls (12, 18) on the body wall (9) and on the roof (7), **characterized in that** the body (6) has, at the front region (15), a receiving chamber (21) which projects forwards over the front wall (12) and enlarges the interior space (10), in particular a front-end saddle compartment (43).

2. Vehicle trailer according to Claim 1, **characterized in that** the roof (7) is of hood-shaped design and, at the front in the region of the tapering (16), has a rounded portion (17) directed rearwards with respect to the front wall (18) .

3. Vehicle trailer according to Claim 1 or 2, **characterized in that** the body (6) has an arched nose shell (20) arranged at the front end in front of the front walls (12, 18).

4. Vehicle trailer according to Claim 1, 2 or 3, **characterized in that** the receiving chamber (21) is designed as a trough-shaped insert (22) which can be fastened in a wall opening (26) of the front wall (12).

5. Vehicle trailer according to Claim 3, **characterized in that** the nose shell (20) surrounds the receiving chamber (21), in particular the insert (22), on the outer side.

6. Vehicle trailer according to Claim 3 or 5, **characterized in that** the arched nose shell (20) covers the front walls (12, 18) and adjoins the tapering (16) and the rounded portion (17) tangentially on the edge side, and also adjoins the lateral body wall (9) and the roof (7) with a joint or tightly.

7. Vehicle trailer according to one of Claims 3, 5 or 6, **characterized in that** the nose shell (20) has a fastening (25) arranged in a concealed manner.

8. Vehicle trailer according to one of Claims 3, 5, 6 or 7, **characterized in that** the nose shell (20) is supported in a form-fitting manner (24) in or at a wall opening (26) of the front wall (12) of the lateral body wall (9).

9. Vehicle trailer according to Claim 7 or 8, **characterized in that** the fastening (25) has upright and angled profiles (54, 55) on the front wall (12) and on the inner side of the nose shell edge, wherein the profiles (54, 55) have flanges or webs, which lie flat against one another in the installation position, for the mutual fastening.

10. Vehicle trailer according to one of the preceding claims, **characterized in that** the body (6) has an annular anchor (26) between the body wall (9) and the roof (7).

11. Vehicle trailer according to Claim 10, **characterized in that** the annular anchor (26) has an encircling receiving profile (28) for the body wall (9) and the roof (7), and also supports (32, 33), which protrude downwards to the floor (8), for preferably flat panels (35) of the body wall (9) .

12. Vehicle trailer according to Claim 11, **characterized in that** the receiving profile (28) has upper and lower receiving grooves (29, 39) for the preferably single-part roof (7) and for panels (35) of the body wall (9).

13. Vehicle trailer according to Claim 11 or 12, **characterized in that** upright supports (32, 33) have, in cross section, a rectilinear or angled H shape with receiving grooves (34) on both sides for panels (35).

14. Vehicle trailer according to Claim 12 or 13, **characterized in that** a receiving profile (28) and/or a support (32, 33) has a sealing arrangement (65) integrated in the receiving groove (29, 30, 34), in particular with a channel-like recess (61) on a side wall (56, 58) and an adhesive or sealing agent (64) there.

## Revendications

1. Remorque de véhicule, en particulier van pour chevaux, comprenant un châssis (2) et une carrosserie fixe (6) entourant un espace interne (10), qui présente un fond (8), une paroi de carrosserie latérale (9) et un toit (7), la carrosserie (6) présentant une région avant (15) rétrécie latéralement et vers le haut (16) avec des parois avant planes en affleurement (12, 18) au niveau de la paroi de carrosserie (9) et au niveau du toit (7), **caractérisée en ce que** la carrosserie (6) présente au niveau de la région avant (15) une chambre de réception (21) faisant saillie vers l'avant au-delà de la paroi avant (12) et augmentant l'espace interne (10), notamment une sellerie (43) du côté avant.

2. Remorque de véhicule selon la revendication 1, **caractérisée en ce que** le toit (7) est réalisé en forme de capot et présente au niveau de la partie avant dans la région du rétrécissement (16) un arrondi (17) orienté vers le bas vers la paroi avant (18).

3. Remorque de véhicule selon la revendication 1 ou 2, **caractérisée en ce que** la carrosserie (6) présente une coque de partie avant courbe (20) disposée à l'avant devant les parois avant (12, 18) .

4. Remorque de véhicule selon la revendication 1, 2 ou 3, **caractérisée en ce que** la chambre de réception (21) est réalisée sous forme d'insert (22) en forme de cuvette et pouvant être fixé dans une ouverture de paroi (26) de la paroi avant (12) .

5. Remorque de véhicule selon la revendication 3, **caractérisée en ce que** la coque de partie avant (20) entoure du côté extérieur la chambre de réception (21), en particulier l'insert (22).

6. Remorque de véhicule selon la revendication 3 ou 5, **caractérisée en ce que** la coque de partie avant courbe (20) recouvre les parois avant (12, 18) et se raccorde du côté du bord tangentiellement au rétrécissement (16) et à l'arrondi (17) et se raccorde avec un joint ou hermétiquement à la paroi de carrosserie latérale (9) et au toit (7).

7. Remorque de véhicule selon l'une quelconque des revendications 3, 5 ou 6, **caractérisée en ce que** la coque de partie avant (20) présente une fixation (25) disposée de manière dissimulée.

8. Remorque de véhicule selon l'une quelconque des revendications 3, 5, 6 ou 7, **caractérisée en ce que** la coque de partie avant (20) est supportée par engagement par correspondance de formes (24) dans ou sur une ouverture de paroi (26) de la paroi avant (12) de la paroi de carrosserie latérale (9).

9. Remorque de véhicule selon la revendication 7 ou 8, **caractérisée en ce que** la fixation (25) présente des profilés verticaux et coudés (54, 55) au niveau de la paroi avant (12) et au niveau du côté intérieur du bord de la coque de partie avant, les profilés (54, 55), dans la position de montage, présentant des brides ou des nervures s'appliquant à plat les unes contre les autres pour une fixation mutuelle.

10. Remorque de véhicule selon l'une quelconque des revendications précédentes, **caractérisée en ce que** la carrosserie (6) présente une armature annulaire (26) entre la paroi de carrosserie (9) et le toit (7) .

11. Remorque de véhicule selon la revendication 10, **caractérisée en ce que** l'armature annulaire (26) présente un profil de réception périphérique (28) pour la paroi de carrosserie (9) et le toit (7) ainsi que des supports (32, 33), faisant saillie vers le bas vers le plancher (8), pour des panneaux de préférence plans (35) de la paroi de carrosserie (9).

12. Remorque de véhicule selon la revendication 11, **caractérisée en ce que** le profil de réception (28) présente des rainures de réception supérieure et inférieure (29, 39) pour le toit de préférence d'une seule pièce (7) et pour des panneaux (35) de la paroi de carrosserie (9).

13. Remorque de véhicule selon la revendication 11 ou 12, **caractérisée en ce que** des supports verticaux (32, 33) présentent, en section transversale, une forme en H droite ou coudée avec des rainures de réception bilatérales (34) pour des panneaux (35).

14. Remorque de véhicule selon la revendication 12 ou 13, **caractérisée en ce qu'**un profil de réception (28) et/ou un support (32, 33) présentent un agencement d'étanchéité (65) intégré dans la rainure de réception (29, 30, 34), en particulier avec un évidement de type rigole (61) au niveau d'une paroi latérale (56, 58) et un moyen de scellement ou d'étanchéité (64) à cet endroit.
